(19) Europäisches Patentamt
European Patent Office
Office européen des brevets

(11) EP 1 841 159 A2

(12) **EUROPEAN PATENT APPLICATION**

(43) Date of publication:
**03.10.2007 Bulletin 2007/40**

(51) Int Cl.:
**H04L 27/26** (2006.01)

(21) Application number: **06253454.0**

(22) Date of filing: **30.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.03.2006 JP 2006093791**

(71) Applicant: **Fujitsu Ltd.**
**Kawasaki-shi, Kanagawa 211-8588 (JP)**

(72) Inventor: **Saitou, Naoyuki,**
**Fujitsu Limited**
**Kawasaki-shi,**
**Kanagawa 211-8588 (JP)**

(74) Representative: **Mohun, Stephen John**
**Haseltine Lake**
**Lincoln House**
**300 High Holborn**
**London WC1V 7JH (GB)**

(54) **Radio communication apparatus and radio communication unit**

(57)    The radio communication apparatus includes: one or more radio units (2-i) each with one or more antennas (24-k; k=1 through M) ; a plurality of baseband processing units (11-j; j = 1 through N) which perform baseband signal processing of signals, transceived by said radio units (2-i), in a frequency domain; and a connection interface (12) which interfaces between said radio unit (2-k) and any of said plurality of baseband processing units (11-j) with signals in a frequency domain. With this arrangement, the transmission capacity of an interface inside the radio communication apparatus and power consumption are reduced, and the radio communication apparatus has superior flexibility and functional expandability for various types of services.

FIG. 1

EP 1 841 159 A2

**Description**

CROSS REFERENCE TO RELATED APPLICATIONS

This application is based on and hereby claims priority to Japanese Application No. 2006-93791 filed on March 30, 2006 in Japan, the contents of which are hereby incorporated by reference.

BACKGROUND OF THE INVENTION

(1) Field of the Invention:

The present invention relates to radio communication apparatuses and radio units. For example, the invention relates to technology suitable for use in Base Transceiver Stations (BTS) employing multi-carrier transmission schemes, such as OFDM (Orthogonal Frequency Division Multiplexing) and OFDMA (Orthogonal Frequency Division Multiple Access), which BTSs are in need of the Inverse Fast Fourier Transform (IFFT) function and the Fast Fourier Transform (FFT) function.

(2) Description of the Related Art:

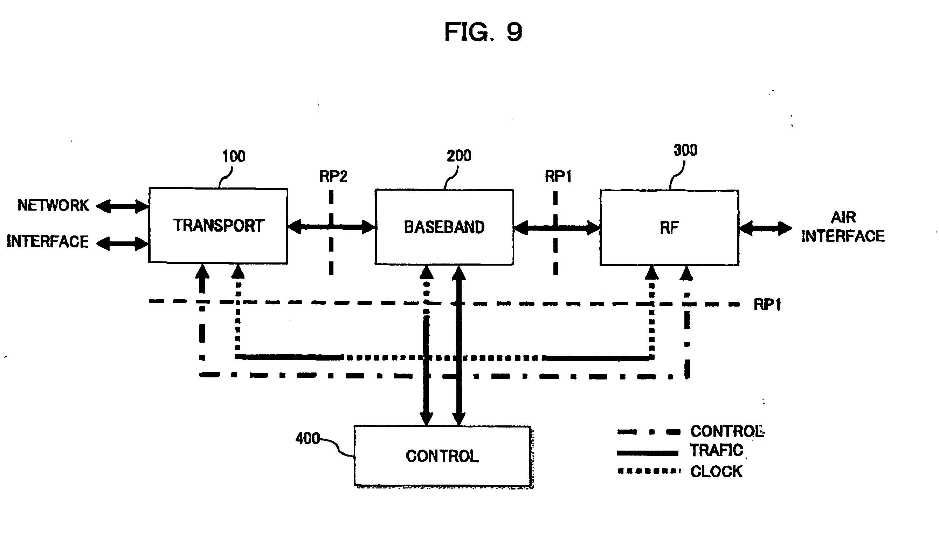

Recently, for the purpose of creating open cellular base station interface specifications, a standardization organization called "Open Base Station Standard Initiative (OBSAI) ", which started life as an open forum, standardizes the architecture of a BTS shown, for example, in FIG. 9.
That is, the architecture under the OBSAI standards in FIG. 9 is defined by a transport block 100, a baseband block 200, an RF block 300, and a control block 400. The internal interface standards are separated into the following three types: RP (Reference Point) 1 which is between the control block 400 and the other blocks 100, 200, and 300; RP 2 which is between the transport block 100 and the baseband block 200; and RP 3 which is between the baseband block 200 and the RF block 300.
Here, in BTSs supporting multi-carrier transmission such as OFDM and OFDMA, the interface standards of the above-mentioned RP 3 are as follows. As the transmission side function of the baseband block 200 (baseband signal processor), the baseband block 200 has an IFFT function and a low-pass filter (blocking of high frequencies) function for a baseband signal. After performing IFFT and low-pass filter processing on a transmission signal, the baseband block 200 interfaces with the RF block 300 with sample signals on the time axis (hereinafter will be called time axis sample signals and time domain signals) . On the other hand, in the receiver system, the RF block 300 interfaces with the baseband block 200 with time axis sample signals which have been subjected to A/D (Analogue/Digital) conversion.
Here, the following patent documents 1 and 2 propose other BTS interface technology.
The technology of the following patent document 1 relates to a base station for a radio system, which base station has a means for establishing communication connection with radio units (MSs) in a valid reachable area. Patent document 1 discloses a construction which includes a central processing unit (BTS) having a switching means and multiple Baseband Frame Units (BBUs). To the central processing unit (BTS) are connected multiple radio units via the switching means. The multiple radio units have multiple radio channel units, and are placed at certain distances apart from the BTS.
With this arrangement, in the technology of patent document 1, signal transceiving between the baseband units and the radio channel units is selectively performed by the switching means, so that usable traffic amount can be transferred among different areas with an easy and uncomplicated method. Further, the transfer distance is significantly lengthened in comparison with publicly known resolving methods.
The technology of the following patent document 2 relates to a transceiving base station for a mobile communication system, which transceiving base station is separated into multiple functional apparatuses. The multiple functional apparatuses make it possible to assign signal processing resources flexibly, and to cost-effectively provide the signal processing resources as hardware. The transceiving base station includes: a coder/decoder function device C having multiple coders and decoders; a receiver/transmitter function device B having a receiver and a transmitter; and an RF/ sector device A having functional sub-devices 1 through N having RF/baseband conversion resources which are necessary for one relevant sector. A connection interface which is capable of assigning arbitrary communication resources contained in the functional devices B and C to arbitrary sectors 1 through *N* interfaces between the RF/sector device A (sector 1 through N), the function device B (receiver and transmitter), and the function device C.
With this arrangement, according to the technology of patent document 2, it is possible to realize a flexible interface between the functional devices, which interface makes possible effective use of signal processing resources in the devices.
[Patent Document 1] Published Japanese Translation of a PCT application No. HEI 11-501172

[Patent Document 2] Published Japanese Translation of a PCT application No. 2001-519635

To make the construction of a BTS support a variety of types of antenna technology (MIMO, AAS, etc.), and to realize flexible functional expansion including increases in the number of transceiver antennas, the scale of baseband signal processing, which is important, is increased.

In particular, in cases where IFFT/FFT functions are required as baseband signal processing, such as OFDM and OFDMA which use the orthogonal frequency-division multiplexing scheme, processing depending upon the number of transmitter antennas and the number of receiver antennas required, so that antenna expansion, such as MIMO (Multi-Input Multi-Output) and AAS(Adaptive Array System), causes increase in the scale of processing.

That is, in the previous technology, the baseband block 200 and the RF block 300 are interfaced with time axis sample signals. At that time, each sample signal includes all the sample signal information in the valid frequency axis domain convoluted therein. Hence, in the case of a transmission signal, if the sample signals are combined, interference components can be generated with respect to all the frequencies. In the case of a reception signal, individual FFT processing becomes necessary to extract a signal component of a part of a frequency domain, so that the scale of the baseband processor is increased.

Further, in this case, in addition to increase in the scale of individual baseband signal processors, the transmission capacity (rate) of a signal interface between the baseband signal processor and the antenna transceiver (RF) is increased. That is, due to increase in the information amount per unit time of an antenna transceiving signal, extremely high-speed interface equal to or greater than 1.0 G bits/second becomes necessary.

Because of such influences, in BTSs supporting various types of services, improvement of functional expansion and flexibility can be prevented.

SUMMARY OF THE INVENTION

With the foregoing problems in view, one object of the present invention is to reduce the transmission capacity of an interface inside a radio communication apparatus and to reduce power consumption. Another obj ect of the invention is to resolve the above described problems at the time of multiplexing/demultiplexing of multiple antenna signals caused by interfacing with signals in a time domain in OFDM or OFDMA, to realize radio communication apparatuses with superior functional expandability and flexibility.

In order to accomplish the above objects, according to the present invention, the following radio communication apparatuses and radio units are provided.

(1) As a generic feature, the present radio communication apparatus comprises: one or more radio units each with one or more antennas; a plurality of baseband processing units which perform baseband signal processing of signals, transceived by the radio units, in a frequency domain; and a connection interface which interfaces between the radio unit and any of the plurality of baseband processing units with signals in a frequency domain.

(2) As a preferred feature, the radio unit includes: a time domain converting unit which converts signals in a frequency domain from the connection interface into signals in a time domain; and a frequency domain converting unit which converts signals in a time domain received through the antennas into signals in a frequency domain, and then outputs the converted signals to the connection interfaces.

(3) As another preferred feature, the time domain converting unit is formed by an Inverse Fast Fourier Transforming (IFFT) unit, and the frequency domain converting unit is formed by a Fast Fourier Transforming unit (FFT).

(4) As yet another preferred feature, the radio communication apparatus comprises two or more of the radio units, wherein the connection interface is formed as a matrix switch unit which inputs a signal from any of the baseband processing units to any of the radio units, and inputs any of the signals received by the plurality of radio units to any of the baseband processing units.

(5) As a further preferred feature, the matrix switch unit has: a frequency separation function of separating frequency-division multiplexed signals, received from any of the baseband processing units, in a frequency domain and distributing the separated signals to a plurality ones of the radio units; and a frequency-division multiplexing function of frequency-division multiplexing the signals of the plurality of radio units and outputting the multiplexed signals to any of the baseband processing units.

(6) As a still further preferred feature, the radio communication apparatus further comprises a controlling means which controls, when a failure occurs in any of the baseband processing units, the connection interface so that any of the radio units, which transceive signals that were processed by the baseband processing unit which has developed the failure, is connected to another of the baseband processing units which has not developed a failure.

(7) As another preferred feature, the radio units are made into groups in cell units or sector units of a cellular mobile communication system, and the matrix switch unit has signal paths set therein so that signals from the radio units which belong to the same group are output to the same baseband processing unit.

(8) As yet another preferred feature, the radio units are made into groups in cell units or sector units of a cellular mobile communication system, and the matrix switch unit has signal paths set therein so that signals from the radio units which belong to different groups are output to the same baseband processing unit.

(9) As a further preferred feature, the radio unit is configured to transceive frequency-division multiplexed signals of multiple different users, and the matrix switch unit has signal paths set therein so that signals of the multiple users are processed on one or more of the baseband processing units for each user.

(10) As a generic feature, there is provided a radio unit with one or more transceiver antennas thereof, which radio unit is connected to a baseband processing apparatus that performs baseband signal processing in a frequency domain, to transceive signals processed on the baseband processing apparatus through the one or more transceiver antennas, the radio unit comprising: a time domain converting means which receives a signal having been subjected to the baseband signal processing on the baseband processing apparatus as a signal in a frequency domain, and converts the signal into a signal in a time domain; and a frequency domain converting means which converts a signal in a time domain, which signal is received through the transceiver antenna and is to be processed on the baseband processing apparatus, into a signal in a frequency domain, and then outputs the converted signal.

The above-described invention guarantees at least the following advantageous results.

(1) Since the radio units are interfaced with baseband processing units with signals in a frequency domain, the signal transmission capacity (interface speed) between the radio unit and the baseband processing unit is reduced in comparison with the previous art in which interfacing is performed with signals in a time domain. Accordingly, even if the number of radio units is increased, the interface speed in need is suppressed in comparison with that in the previous art, while high-speed transmission is realized, so that the present invention contributes to reduction of power consumption of the radio communication apparatus.

(2) Further, the already-described issues at the time of multiplexing/demultiplexing of multiple antenna signals due to interfacing with time domain signals, that is, ($i$) an interference component generated when signals in which information of all the sample signals in a valid frequency axis domain is convoluted are multiplexed (combined) and (ii) the necessity of FFT processing to be individually performed, to extract a signal component of a part of frequency domain, can be resolved.

(3) Still further, since the above-mentioned connection interface (matrix switch unit) is provided, signal paths between multiple baseband processing units and multiple radio units are arbitrarily selected, so that increase and decrease in the number of baseband processing units and/or radio units are easily performed. This realizes a radio communication apparatus superior in flexibility and functional expansion for supporting various types of services.

(4) Yet further, radio communication apparatus employing the multi-carrier transmission scheme, such as OFDM and OFDMA, needs the IFFT and FFT functions. By means of providing these functions for radio units, it is possible to easily realize interfacing with signals in the above-mentioned frequency domain.

(5) Furthermore, even when a failure occurs in any of the baseband processing units and/or the radio units, signal paths set in the above-mentioned connection interface (matrix switch unit) are controlled, whereby switching to another baseband processing unit and/or radio unit is easily performed. This easily realizes work/protection circuit switching (redundant construction).

Other objects and further features of the present invention will be apparent from the following detailed description when read in conjunction with the accompanying drawings.

BRIEF DESCRIPTION OF THE DRAWINGS

FIG. 1 is a block diagram showing a construction of an important part of a Base Transceiver Station (BTS) as a radio communication apparatus according to one preferred embodiment of the present invention;

FIG. 2 is a diagram showing an example of application of the BTS of FIG. 1 to a radio access point system;

FIG. 3 is a diagram showing an example of application of the BTS of FIG. 1 to a cellular mobile communication system;

FIG. 4 is a block diagram showing a detailed construction of an important part of the BTS of FIG. 1;

FIG. 5 is a diagram for describing an operation with attention paid to selection (switching) of transceiving signals by a matrix connector of the BTS of FIG. 1;

FIG. 6 is a diagram for describing a second mode of an operation with attention paid to selection (switching) of transceiving signals by a matrix connector of the BTS of FIG. 1;

FIGS. 7 (A) and 7(B) are diagrams for describing a third mode operation with attention paid to selection (switching) of transceiving signals by a matrix connector of the BTS of FIG. 1;

FIGS. 8(A) and 8(B) are diagrams for describing a fourth mode of an operation with attention paid to selection (switching) of transceiving signals by a matrix connector of the BTS of FIG. 1; and

FIG. 9 is a block diagram for describing the architecture of a previous BTS under the OBSAI standards.

## DESCRIPTION OF THE PREFERRED EMBODIMENT(S)

[A] First Embodiment:

(A1) General Description:

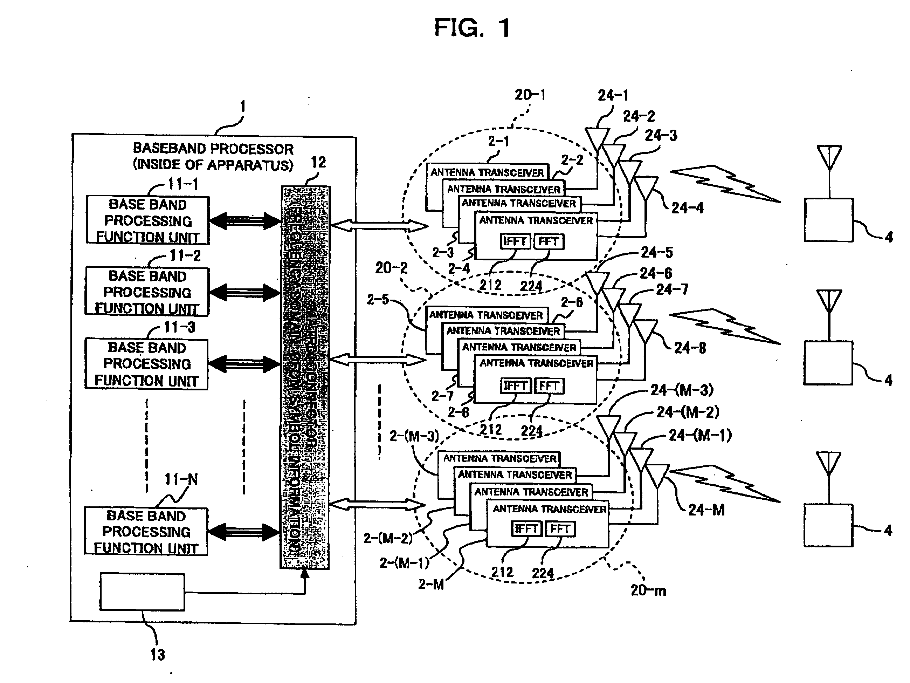

FIG. 1 is a block diagram showing a construction of an important part of a Base Transceiver Station (BTS) as a radio communication apparatus according to one preferred embodiment of the present invention. The BTS of FIG. 1 includes, for example, a baseband processor (baseband processing apparatus) 1 and multiple antenna transceivers (radio units) 2-1 through 2-M (M is an integer greater than 2) communicably connected to the baseband processor 1, which antenna transceivers (radio units) 2-1 through 2-M communicate wirelessly with radio terminals 4, such as mobile phones, having a radio communication function. The antenna transceivers 2-1 through 2-M communicate with the radio terminals 4 via one or more transceiver antennas.

Each of the radio units 2-k (k = 1 through M) has a transceiver antenna 24-k. The multiple radio units 2-k can be grouped in accordance with the communication amount of areas and sectors to which radio communication service is provided. For example, FIG. 1 shows an example in which multiple radio units 2-k are grouped into m-number of radio unit groups (antenna groups) 20-1 through 20-m.

In this instance, the number of transceiver antennas (hereinafter also simply called the "antennas") 24-k per radio unit 2-k depends on transceiving diversity and on the system morphology such as MIMO and AAS (that is, the ratio of the number of radio units 2-k to the number of antennas 24-k is not limited to 1 to 1). Note that when individual radio units 2-k (individual antennas 24-k) are not distinguished thereamong, they are sometimes simply called "radio unit 2" (antenna 24).

Here, the groups 20-i (i = 1 through m) can include the same number of radio units 2-k or different numbers of radio units 2-k. A necessary number of radio units 2-k are prepared in the groups 20-i according to the communication amount in need for each group 20-i.

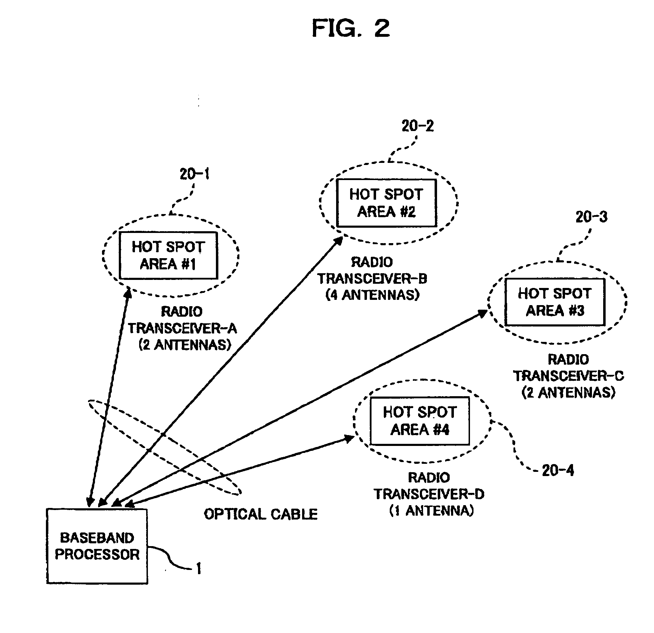

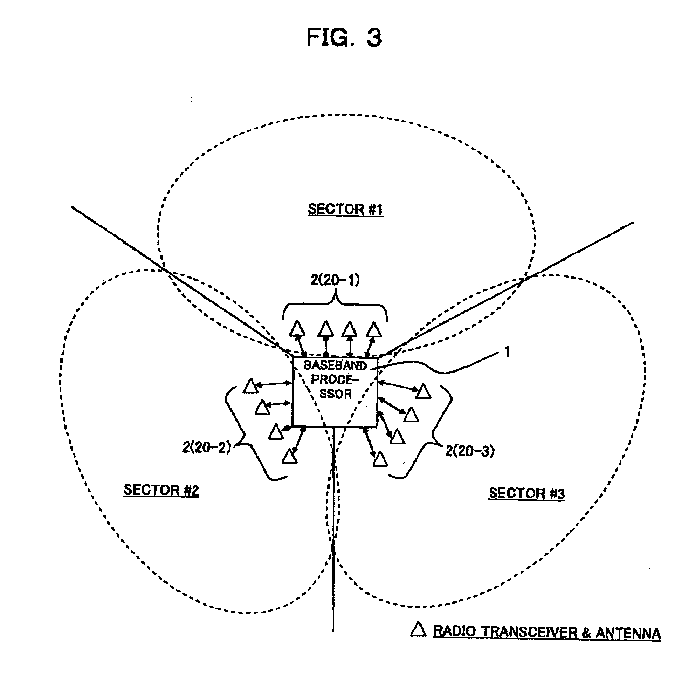

For example, FIG. 2 shows a system in which radio communication service is provided to multiple areas, radio access points (hot spot areas) #i, which are studded and separated from the BTS (baseband processing unit) 1. In such a system, a necessary number of radio units 2-k are provided for each of the radio access points #i according to the communication amount needed by each radio unit group 20-i (radio unit 2-k) . Each of the radio unit groups 20-i (radio units 2-k) is connected to the baseband processor 1 through an optical cable or the like. In this instance, radio units 2-k (radio unit group 20-i) in the present example are called optical remote apparatuses (small-sized base stations). As shown in FIG. 3, in a cellular radio communication system, the radio units 2-k are grouped into the radio unit groups 20-i according to the communication amount necessary for each of the radio unit groups 20-i to form sectors #i.

Assuming that the radio units 2-k support OFDM and OFDMA, they are equipped with function units for IFFT processing and FFT processing, which units were provided for the baseband processing unit 1 in previous arts. Thus, on each of the radio units 2-k, IFFT processing of transmission signals and FFT processing of reception signal can be performed. In this instance, IFFT processing can be replaced by IDFT (Inverse Discrete Fourier Transform) processing; FFT processing can be replaced by the DFT (Discrete Fourier Transform) processing.

On the other hand, with attention paid to its important part, the baseband processor 1 includes: multiple baseband processing function units (boards) 11-1 through 11-N (N is an integer greater than 2); a matrix connector (switch) 12; and a transceiving signal selection setting controller 13.

Here, the baseband processing function units 11-j (j = 1 through N) carries out necessary baseband signal processing on signals transceived with the radio unit 2. The controller (controlling means) 13 controls the internal connection state of the matrix connector 12 based on assignment information as to which of the baseband processing function units 11-j copes with (processes) transceiving signals of which of the radio units 2, thereby setting signal paths between arbitrary (at least any one of) baseband processing function units 11-j and arbitrary (at least any one of) radio units 2 and switching therebetween.

Then, the matrix connector (matrix switch unit) 12 electrically connects the baseband processing function units 11-j and the radio units 2, and its internal connection state (signal paths) is controlled (set) by the transceiving signal selection setting controller 13, as described above. The matrix connector 12 hereby serves as a connection interface which sets and switches signal paths between arbitrary baseband processing function units 11-j and arbitrary radio units 2. In the present example, the matrix connector 12 interfaces between the baseband processing function units 11-j and the radio units 2 with signals in a frequency domain, not signals in a time domain.

That is, signals (transmission signals) sent from the baseband processing function units 11-j are transferred to the radio units 2 as signals in a frequency domain, as they are, and signals (reception signals) sent from the radio units 2 are transferred to the baseband processing function units 11-j as signals in a frequency domain, as they are.

Accordingly, it becomes possible to process signals transceived between the baseband processing function units 11-j and the radio units 2 in symbol data units on the frequency axis, and it also becomes possible to process signals transceived by any of the radio units 2 on any of the baseband processing function units 11-j . That is, assuming that the number of radio units 2 is M, the matrix connector 12 provides an N-to-M matrix switch. It is thus possible to easily realize multiplexing, demultiplexing, and matrix switching processing between multiple baseband processing function units 11-j and the radio units 2.

In comparison with previous arts in which interface (hereinafter also sometimes called the "time axis interface") between the baseband processing function units 11-j and the radio units 2 is performed with time axis sample signals, the present invention in which the interface (hereinafter also sometimes called the "frequency axis interface") is carried out with signals in a frequency domain (symbol data) reduces the transmission capacity between the baseband processing function units 11-j and the radio units 2 down to approximately 1/3, so that economic costs such as power consumption can be reduced.

For example, in OFDM or OFDMA, according to a previous art in which interface is carried out with time axis sample signals, the transceiving main signal capacity per symbol time for one antenna (radio unit 2) is expressed by:

$$\texttt{15 bits} \times \texttt{2 (I, Q complex conjugates)} \times \texttt{the number}$$

$$\texttt{of FFTs (2,048; 1,024; 256@2}^{\texttt{n}}\texttt{)} \times \texttt{2 (over sampling)}$$

However, according to the present example (on the frequency axis),

$$\texttt{[3 bits} \times \texttt{2 (I, Q complex conjugates) + 2 bits (modulation}$$

$$\texttt{scheme information) + 6 bits (power offset information)}$$

$$\texttt{+ other control information 8 bits]} \times \texttt{the number of valid}$$

$$\texttt{data carriers (= FFT size} - \texttt{guard band} - \texttt{DC carrier)}$$

Here, assuming that the number of FFTs (size) = 2,048, the transceiving main signal capacity per symbol time is 122,880 (bits/symbol unit time) in the previous time axis interface, but is 37,444 (bits/symbol unit time) in the frequency axis interface of the present example. Thus, the capacity is reduced down to approximately 1/3.2.

(A2) Concrete Example:

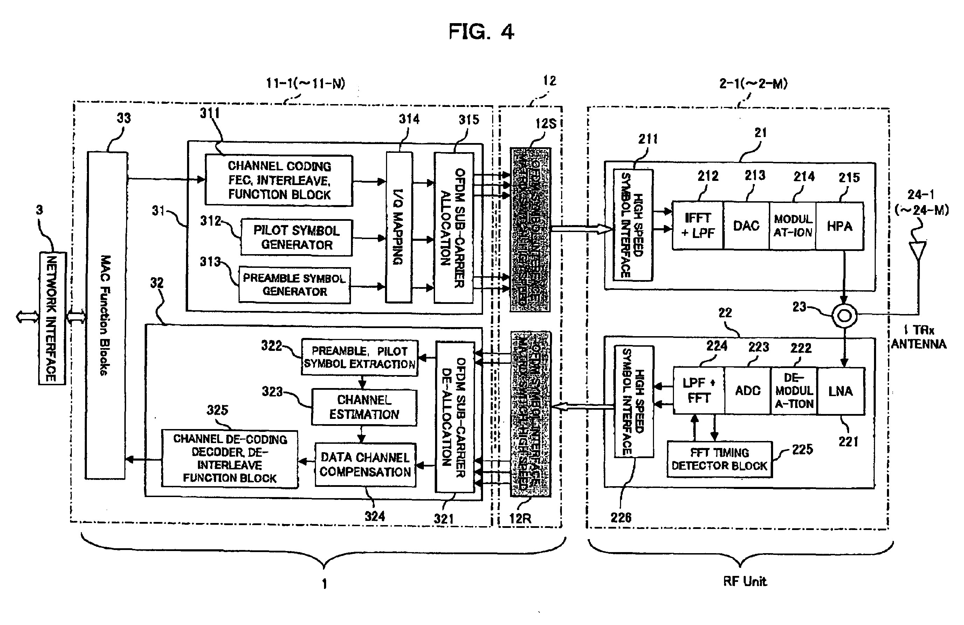

Next, a detailed construction of an important part of a BTS in OFDM and OFDMA to which the above-described frequency axis interface is applied is illustrated in FIG. 4.

The BTS of FIG. 4 includes the transmission baseband processor (transmission system) 31, a reception baseband processor (reception system) 32, and a MAC (Media Access Control) function block (transceiving common unit) 33, as the above-described(N-number of)transmission baseband processing function units 11-j. On the basis of data received by the MAC function block 33 from the core network side such as the Internet or a LAN (Local Area Network) through a network interface 3 such as a LAN card or an Ethernet® card, the transmission baseband processor 31 generates transmission data (multi-carrier signal) and sends the generated transmission data to the radio unit 2 via the matrix connector 12. A signal received from the radio unit 2 via the matrix connector 12 is demodulated by the reception baseband processor 32, and is transmitted to the core network side via the transmission baseband processor 31 and the network interface 3.

Further, the matrix connector 12 already described has a transmission side OFDM symbol interface (high-speed matrix switch) 12S and a receiver side OFDM symbol interface (high-speed matrix switch) 12R corresponding to the transmission system 31 and the reception system 32, respectively, both of which interface between the baseband processor 1 and the radio unit 2 with frequency-domain signals.

Further, in the baseband processing function unit 11-j, the transmission baseband processor 31 includes: a transmission signal (symbol) generator block 311 which has various functions of channel encoding, inserting error correction codes such as FEC (Forward Error Correction), and interleaving; a pilot symbol generator 312; a preamble symbol Generator 313 ; an I/Q mapping unit 314; and an OFDM sub-carrier allocator 315.

In contrast, the reception baseband processor 32 includes, for example, an OFDM sub-carrier de-allocator 321, a preamble/pilot symbol extractor 322, a channel estimator 323, a data channel compensator 324, and a reception signal (symbol) demodulating block 325 having various functions of channel decoding, error correction decoding, and deinterleaving.

Here, first of all, in the transmission baseband processor 31, the transmission signal generating block 311 performs necessary transmission baseband processing, including channel coding, generating and inserting error correction codes, and interleaving, on transmission data from the MAC function block 33, thereby generating transmission symbols (OFDM symbols) for a transport channel (data channel).

The pilot symbol generator 312 generates a pilot channel signal (pilot symbol) used for cell searching and channel estimation on the radio terminals 4. The preamble symbol generator 313 copies a part of valid symbols and generates a cyclic prefix as a guard interval (preamble) to be added to the leading end of the valid symbol, in order to improve resistance to interference between symbols due to a delay wave.

The I/Q mapping unit 314 maps symbol data generated by the above transmission signal generating block 311, the pilot symbol generator 312, and the preamble generator 313 on the IQ complex plane as signal points in accordance with the orthogonal modulation scheme such as QPSK and 16QAM. The OFDM sub-carrier allocator 315 allocates the symbol data (OFDM symbols) mapped by the I/Q mapping unit 314 to specified sub-carriers.

In contrast, in the reception baseband processor 32, the OFDM sub-carrier de-allocator 321 de-allocates signals (signals in a frequency domain) received from the radio unit 2 into sub-carrier signal components, and extracts OFDM symbols transmitted on the sub-carrier. The preamble/pilot symbol extracting unit 322 extracts the preamble (guard interval) and the pilot symbol of OFDM symbols obtained by the OFDM sub-carrier de-allocator 321.

The channel estimator 323 performs correlation arithmetic operation between the pilot symbol extracted by the preamble/pilot symbol extracting unit 322 and a pilot replica, thereby carrying out channel estimation. The data channel compensator 324 uses the channel estimation value obtained by the channel estimator 323 to perform channel compensation of the transport channel.

The reception signal demodulating block 325 performs necessary reception baseband processing, including channel decoding, error correction decoding, and de-interleaving, on a reception signal (valid symbols) on the transport channel after the above-mentioned channel compensation, thereby carrying out demodulation processing of the reception signal.

Next, with attention paid to its important part, the radio unit 2 of FIG. 4 includes: a radio transmission processor 21; a radio reception processor 22; an antenna duplexer (directional coupler) 23; and a transceiver antenna 24. The radio transmission processor 21 further includes, for example, a high-speed symbol interface 211, an IFFT processor 212, a Digital/Analogue Converter (DAC) 213, a modulator 214, and a High Power Amplifier (HPA) 215. The radio reception processor 22 further includes, for example, a Low Noise Amplifier (LNA) 221, a demodulator 222, an Analogue/ Digital Converter (ADC) 223, an FFT processor 224, an FFT timing detector block 225, and a high-speed symbol interface 226.

Here, in the radio transmission processor 21, the high-speed symbol interface 211, which is an interface connected to the transmission-side OFDM symbol interface 12S of the matrix connector 12 through a metallic cable or an optical cable, receives transmission OFDM symbols sent from the interface 12S as a signal in a frequency domain. The IFFT processor (time domain converting unit) 212 performs IFFT processing on transmission symbols from the high-speed symbol interface 211, thereby generating a time-axis sample signal. In this instance, the IFFT processor 212 has a function as a Low Pass Filter (LPF) which removes unnecessary high-frequency components.

The DAC 213 converts the time-axis sample signal obtained by the above-mentioned IFFT processing into an analogue signal. The modulator 214 modulates the analogue signal with a modulation scheme such as QPSK or 16QAM. The HPA 215 amplifies the modulation signal obtained by the modulator 214 up to desired transmission power. The amplified signal passes through the antenna duplexer 23 and is sent out toward a radio terminal 4 through the transceiver antenna 24.

On the other hand, in the radio reception processor 22, the LNA 221 amplifies a signal which is received through the transceiver antenna 24 and is then input from the antenna duplexer 23 up to a necessary power value with low noise. The demodulator 222 demodulates the reception signal from the LNA 221 with a demodulation scheme corresponding to the modulation scheme (QPSK or 16QAM) used in the radio terminal 4. The ADC 223 converts the demodulation signal obtained by the demodulator 222 into a digital signal.

The FFT timing detector block 225 detects FFT timing [head timing of a time duration (FFT window) in which FFT processing is performed] on the basis of the digital demodulation signal obtained by the ADC 223. The FFT processor (frequency domain converting unit) 224 performs FFT processing on the digital demodulation signal obtained by the above ADC 223 with such FFT timing, thereby generating a signal in a frequency domain (OFDM symbols). In this instance, the FFT processor 224 has a function as a Low Pass Filter (LPF) which removes unnecessary high-frequency components.

The high-speed symbol interface 226, which is an interface connected to the matrix connector 12 (receiver-side OFDM symbol interface 12R) through a metallic cable or an optical cable, sends out the OFDM symbols obtained by the FFT processor 224, as symbol data in a frequency domain, to the baseband processing function units 11-j side.

(A3) Description of Operation

Hereinafter, an operation of a BTS with the above-described construction will be described in detail.

First of all, with attention paid to transmission processing, data to be transmitted to the radio terminals 4 is input from the network interface 3 to the MAC function block 33, and the data is input from the MAC function block 33 to the transmission baseband processor 31. In the transmission baseband processor 31, the transmission signal generating block 311 performs necessary transmission baseband processing including channel coding, error correction code generation and insertion, interleave processing, and generates transmission symbols (OFDM symbols) for the transport channel (data channel).

Further, a pilot symbol to be multiplexed onto the transport channel is generated by the pilot symbol generator 312, and a guard interval is generated by the preamble symbol generator 313. These are input to the I/Q mapping unit 314 together with the transmission symbols on the above transport channel.

The I/Q mapping unit 314 maps symbol data generated by the transmission signal generating block 311 , the pilot symbol generator 312, and the preamble generator 313, respectively, as signal points, on the IQ complex plane (I-Q plane), according to an orthogonal modulation scheme such as QPSK and 16QAM.

Next, the symbol data thus mapped on the I-Q plane, is allocated to a specified sub-carrier by the OFDM sub-carrier allocator 315, and is input to the radio transmission processor 21 of any of the radio units 2 via the matrix connector 12 (transmission-side OFDM symbol interface 12S) as symbol data on the frequency axis.

In the radio transmission processor 21, the high-speed symbol interface 211 receives the above-mentioned symbol data. The IFFT processor 212 performs IFFT processing on the data and converts the data into data on the time axis. Then, the DAC 213 converts the data into an analogue signal. Next, this analogue signal is modulated (including up-converting to a radio frequency signal) by the modulator 214 with a desired modulation scheme such as QPSK or 16QAM. The modulated signal is amplified up to a necessary transmission power value by the HPA 215, and is then sent out from the transceiver antenna 24 via the antenna duplexer 23.

On the other hand, with attention paid to the reception side, a reception signal received by the transceiver antenna 24, is input to the LNA 221 of the radio reception processor 22 via the antenna duplexer 23. The LNA 221 amplifies the reception signal up to a desired power value with low noise. The signal is then demodulated by the demodulator 222 with the demodulation scheme corresponding to the modulation scheme (QPSK, 16QAM, or the like) used on the radio terminal 4 side, and is converted into a digital signal by the ADC 223.

The thus-obtained digital demodulation signal is subj ected to FFT processing performed by the FFT processor 224 at FFT timing detected by the FFT timing detector block 225, and is converted into a signal (OFDM symbol data on the frequency axis) in a frequency domain. The signal in a frequency domain is input, as it is, from the high-speed symbol interface 226 to the reception baseband processor 32 of any of the baseband processing function units 11-j via the matrix connector 12 (receiver-side OFDM symbol interface 12R)

In the reception baseband processor 32, the reception OFDM symbol data on the frequency axis is separated into sub-carriers by the OFDM sub-carrier de-allocator 321, and then input to the preamble/pilot symbol extracting unit 322 and the data channel compensator 324. In the preamble/pilot symbol extracting unit 322, a guard interval is extracted (removed or combined) and a pilot symbol is extracted. On the basis of the pilot symbol, the channel estimator 323 obtains a channel estimation value.

Using this channel estimation value, the data channel compensator 324 performs channel compensation processing on the transport channel which has been allocated to the sub-carrier separated by the OFDM sub-carrier de-allocator 321. The reception signal demodulating block 325 performs necessary reception baseband processing (demodulation processing) including channel decoding, error correction decoding, and de-interleaving, on the signal (valid symbols) on the transport channel after the channel compensation. The thus-obtained demodulation data is sent from the network interface 3 to the LAN and the Internet via the MAC function block 33.

(A3. 1) Transceiving Signal Selecting (Switching) Operation (First Mode):

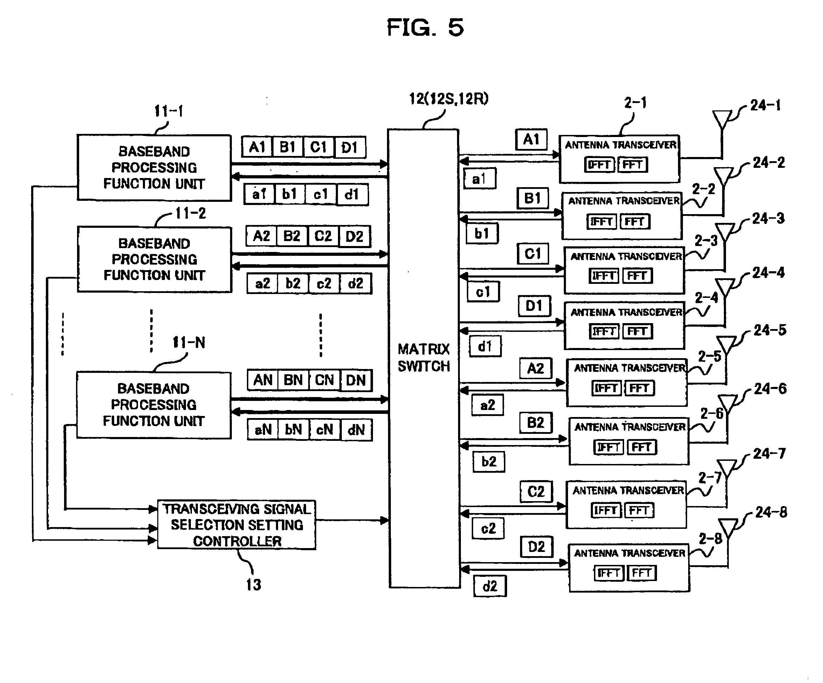

Next, with the above-described operation of the whole as a precondition, referring to FIG. 5, a description will be made of an example of an operation with attention paid to selection (switching) of transceiving signals by the matrix connector 12 of the present example. It is to be noted that, in FIG. 5, attention is paid to eight radio units 2-1 through 2-8 (transceiver antenna 24-1 through 24-8). Transmission OFDM symbol information (frequency division) (information packets) of an arbitrary four antennas transmitted from the baseband processing function units 11-i is given as "Ai, Bi, Ci, Di, " (i=1 through N) ; reception OFDM symbol information (information packets) of an arbitrary four antennas input to the baseband processing function unit 11-i is given as "ai, bi, ci, di".

As shown in FIG. 5, the matrix connector 12 of the present example selectively switches input/output of the OFDM symbol information on the frequency axis in antenna units as packet information, thereby interfacing between an arbitrary radio unit 2-k and an arbitrary baseband processing function unit 11-j on the frequency axis. In this instance, the internal connection state of the matrix connector 12 is controlled by the transceiving signal selection setting controller (hereinafter also simply called the "controller") 13 based on allocation information from the baseband processing function units 11-i.

For example, assuming that allocation setting is performed as follows: the baseband processing function unit 11-1 is in charge of transceiving processing of information packets transceived between the unit 11-1 and four radio units 2-1 through 2-4; the baseband processing function unit 11-2 is in charge of transceiving processing of information packets transceived between the unit 11-2 and the remaining four radio units 2-5 through 2-8, the internal connection state of the matrix connector 12 (transmitter-side OFDM symbol interface 12S) is controlled by the controller 13 on the basis of such allocation information. As a result, information packet A1 is distributed (separately input) to the radio unit 2-1; information packet B1, to the radio unit 2-2; information packet C1, to the radio unit 2-3; information packet D1, to the radio unit 2-4.

Likewise, of information packets A2, B2, C2, and D2 of four antennas generated by the baseband processing function unit 11-2, information packet A2 is distributed (separately input) to the radio unit 2-5; information packet B2, to the radio unit 2-6; information packet C2, to the radio unit 2-7; information packet D2 to the radio unit 2-8.

On the other hand, all the information packets a1, b1, c1, and d1 received by the radio units 2-1 through 2-4, respectively, are input (multiplexedly input) to the baseband processing function unit 11-1 by controlling, with the controller 13, the internal connection state of the matrix connector 12 (receiver side OFDM symbol interface 12R) on the basis of the above allocation information. Likewise, all the information packets a2, b2, c2, and d2, which are received by the radio units 2-5 through 2-8, respectively, are input (multiplexedly input) to the baseband processing function unit 11-2.

That is, the matrix connector 12 has a frequency demultiplexing function of separating a frequency-division multiplexed signal from any of the baseband processing function units 11-j in a frequency domain, and distributing the signals to multiple radio units 2, and a frequency multiplexing function of frequency-division multiplexing signals from multiple radio units 2 and outputting the multiplexed signals to any of the baseband processing function units 11-j. Transceiving signals of the radio units 2-1 through 2-4 are processed by the baseband processing function unit 11-1; transceiving signals of the radio units 2-5 through 2-8 are processed by the baseband processing function unit 11-2. Thus, demultiplexing of transmission signals and multiplexing of reception signals can be performed in information packet units.

Accordingly, for example, in a cellular construction (application to a mobile terminal communication system), reception signals between multiple antennas 24-k and multiple sectors can be distributed to arbitrary baseband processing function units 11-j by antenna 24-k or by sector, so that it becomes easy to perform interference suppressing processing, such as RAKE combination processing, on the baseband processing function unit 11-j side.

In this instance, the number of radio units 2 which can be processed by a single base band processing function unit 11-j should not be limited to "4", and the number can be varied as necessary. In addition, the combination of switching patterns of signal paths in the matrix connector 12 is also varied as needed according to the number of radio units 2 and the number of baseband process ing function units 11-i.

Further, demultiplexing processing of transmission signals and multiplexing processing of reception signals should not be limited to the above example. The demultiplexing processing means dividing information of multiple packets into information of packet units, and distributing each of the packet units to an arbitrary radio unit 2. The multiplexing processing means that when the information packet of an arbitrary radio unit 2 is connected to an arbitrary baseband processing function unit 11-j , information packets to be distributed to an identical baseband processing function unit 11-j can be processed collectively.

As a result, when the radio units 2 are grouped in cell units or sector units in a cellular mobile communication system, signal path setting in the matrix connector 12 makes it easy (i) to output signals from multiple radio units 2 which belong to the same group 20-i to the same baseband processing function units 11-j and (*ii*) to output signals from multiple radio units 2 which belong to different groups 20-i to the same baseband processing function unit 11-j.

Then, as described so far, since a matrix connection unit (frequency axis interface) 12 interfaces between multiple baseband processing function units 11-j and multiple radio units 2, various types of extended constructions and extended functions are easily available.

(A3 - 2) Transceiving Signal Selection (Switching) Operation (Second Mode):

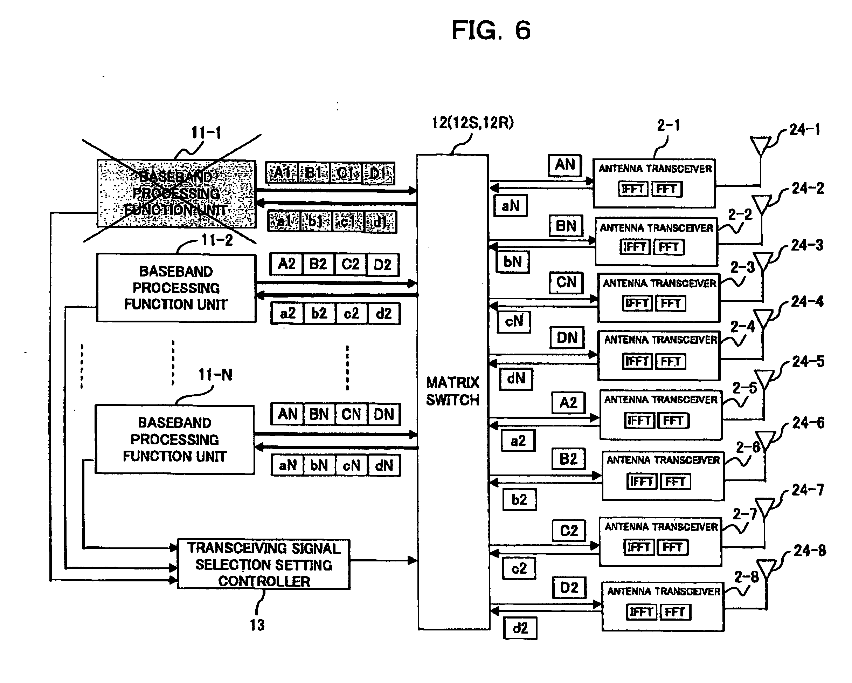

Next, referring to FIG. 5 and FIG. 6, a description will be made of a case where a failure occurs in any of the baseband processing function units 11-j. In this instance, in FIG. 6, as in the case of FIG. 5, transmission OFDM symbol information (frequency division) (information packets) of four arbitrary antennas transmitted from the baseband processing function units 11-i is given as "Ai, Bi, Ci, and Di" (i = 1 through N), and reception OFDM symbol information (information packet) of four arbitrary antennas input to the baseband processing function units 11-i is given as "ai, bi, ci, and di".

First of all , it is assumed here that a system has been operated with signal path setting in the matrix connector 12 as already described with reference to FIG. 5. In this case, the controller 13 is notified of information about the operation states of the baseband processing function units 11-1 through 11-N [for example, normal operation, occurrences of abnormalities, and standby (protection)] from the baseband processing function units 11-j . In the present example, for example, the baseband processing function unit 11-N is on standby (protection) .

If a failure occurs in the baseband processing function unit 11-1, the fact that the failure (abnormal state) is occurring is notified to the controller 13. Upon reception of the notification of the abnormal state, the controller 13 makes the baseband processing function unit 11-N, which is on standby, start operation (work), and the controller 13 controls thematrix connector 12 to change the signal paths of the radio unit 2-1 through 2-4 in such a manner that transceiving signals (information packets) of the radio units 2-1 through 2-4, which were processed by the baseband processing function unit 11-1 in which a failure occurs, are processed on the baseband processing function unit 11-N.

That is, in the example of FIG. 6, a transmission signal (information packets) AN, BN, CN, and DN, generated by the baseband processing function unit 11-N, is divided into information packet units, which are then output (delivered) to the radio units 2-1, 2-2, 2-3, and 2-4, respectively. Reception signals (information packets) aN, bN, cN, and dN, received by the radio units 2-1, 2-2, 2-3, and 2-4, respectively, are multiplexed by the matrix connector 12, and are then input to the baseband processing function unit 11-N.

In this manner, even if any of the baseband processing function units 11-j which are in operation become unavailable due to abnormality occurring in the baseband processing function unit 11-j, to interface between the multiple baseband processing function units 11-j and the multiple radio unit 2 by means of the matrix connector (frequency axis interface) 12 makes it possible to switch transceiving signals which were processed on the baseband processing function unit 11-j concerned to another baseband processing function unit 11-p (p = 1 through N; p " j), so that it is possible to easily realize switching between the current and an protection circuit (redundant construction).

(A3. 3) Transceiving Signal Selection (Switching) Operation (Third Mode):

Further, when each of the baseband processing function units 11-j processes information of multiple different users, it is possible to realize a construction in which one and the same antenna 24-k (radio unit 2) can be used to transceive the multiple different users' signals.

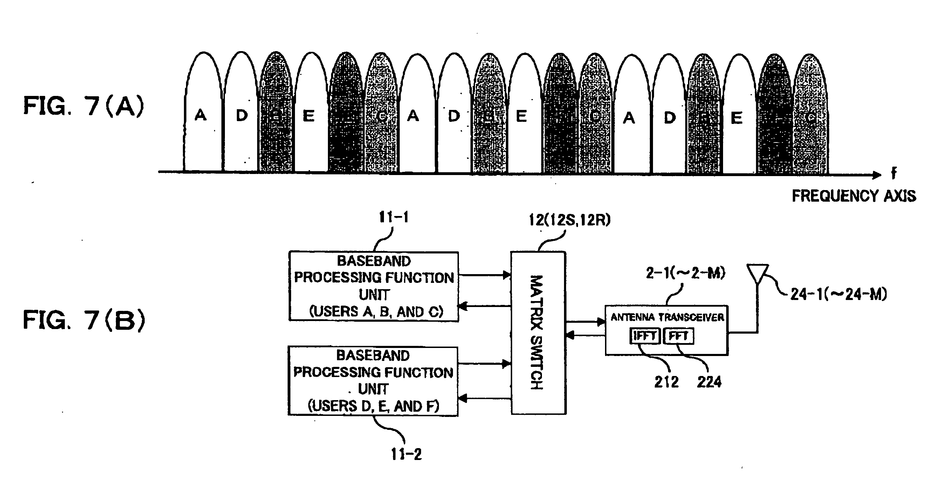

For example, as shown in FIG. 7 (A), when information of different users A, B, C, D, E, and F (different radio terminals 4) is divided (allocated) into different frequencies (sub-carriers) for transceiving thereof, it becomes possible, as shown in FIG. 7 (B), to process a part of user information (for example, users A, B, and C) transceived on any of the same radio units 2, and to process the remaininguser information (users D, E, and F) on another baseband processing function unit 11-2.

That is, it is possible to perform baseband signal processing of the same cell or the same sector with symbol data on the frequency axis in transceiving through multiple antennas (radio units 2), such as transmission/reception diversity, MIMO, and AAS., so that communication circuit processing of signals of different radio terminals 4 of multiple users can be shared among multiple baseband processing function units 11-j (the same radio units 2).

This is because the matrix connector 12 makes it possible to transceive multiple pieces of user information (information packets) between the multiple baseband processing function unit 11-j and the multiple radio units 2 under a state where the multiple pieces of user information (information packets) are division-multiplexed for each user in the frequency domain. In other words, in this case, the signal paths in the matrix connector 12 are set so that signals of multiple users are processed on one or multiple baseband processing function units 11-j for each user.

According to previous arts, since interfacing with radio units is performed with time axis sample signals which have been subjected to IFFT processing, different user information components of the whole of the frequency domain are convoluted in a single sample signal. Accordingly, to perform transceiving processing similar to that of the present example in previous arts, it is necessary that time axis sample signals sent by the multiple baseband processing function units 11-j should be added (combined) at the same time (timing).

In contrast, the present example eliminates the necessity of this timing control and addition (combination) processing, so that the circuit size is reduced and flexible functional expandability [the number of radio units (the number of antennas) can be increased or decreased] is easily realized.

In this instance, FIG. 7 (A) and FIG. 7 (B) illustrate the simplest basic mode, and the number of antennas (the number of radio units), the number of users, the number of baseband processing function units 11-j should by no means be limited to those in FIG. 7 (A) and FIG. 7 (B), and such numbers can be varied as necessary. In such a case, the effects and benefits described above are also obtained.

(A3. 4) Transceiving Signal Selection (Switching) Operation (Fourth Mode) :

Further, according to the matrix connector 12 already described above, in a multi-carrier transmission system in which band signals such as those in the 3.5 MHz band, the 5 MHz band, and the 10 MHz band, are treated as different carriers, and in which such multiple carriers are adj acent to one another in a frequency arrangement, it is possible to transceive signals each in a single carrier to be processed by each baseband processing function unit 11-j with the same antenna (radio unit 2).

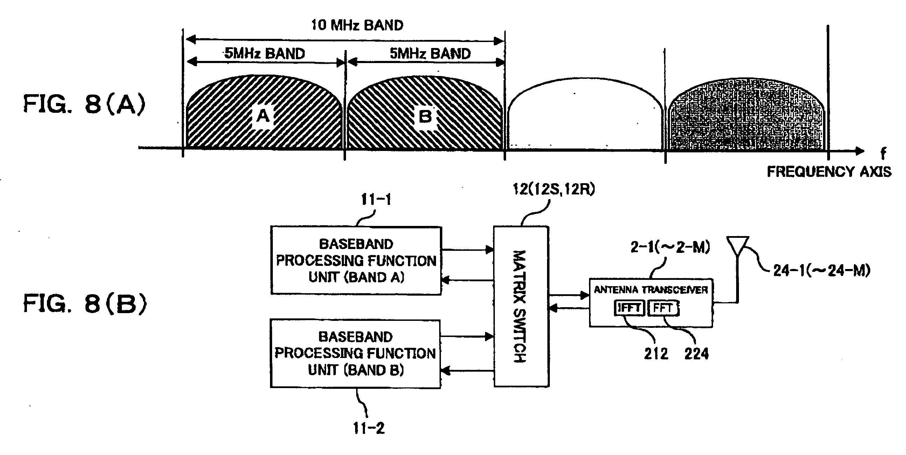

This can be considered as a functional expansion of the above item (A3. 3). More specifically, as shown in FIG. 8(A) and FIG. 8(B), it is assumed that multiple different pieces of user information are frequency-division multiplexed by OFDM in two adjacent 5 MHz-bands A and B. When any of the radio units 2 transceives signals in the 10 MHz-band containing the two adjacent 5 MHz bands A and B, transceiving signal (information packet) in one (A) of the two 5 MHz-band can be processed by the baseband processing function unit 11-1, and the other (B) of the two 5 MHz-band can be processed by the baseband processing function unit 11-2. That is, in this case, the signal paths in the matrix connector 12 are set so that signals in multiple bands are processed by one or multiple baseband processing function units 11-j for each band.

In contrast, according to the previous art, an antenna 24-k (radio unit 2-k) dedicated to each of the multiple bands (A, B) is necessary. Thus, it is difficult to realize a construction in which processing of transceiving signals in different bands is performed on the same radio unit 2.

Further, the present invention should by no means be limited to the above-illustrated embodiment, and various changes or modifications may be suggested without departing from the gist of the invention.

As described so far, according to the present invention, the baseband processors and the radio units are interfaced therebetween with signals in a frequency domain, so that interface speed in the radio communication apparatus and power consumption are reduced. Further, the above described problems at the time of multiplexing/demultiplexing of multiple antenna signals caused by interfacing with signals in a time domain in OFDM or OFDMA are resolved. Accordingly, radio communication apparatuses with superior functional expandability and flexibility are realized, so that the present invention is significantly useful in the field of radio communication technology.

**Claims**

1. A radio communication apparatus, comprising:

   one or more radio units (2-i) each with one or more antennas (24-k; k=1 through M);
   a plurality of baseband processing units (11-j ; j = 1 through N) which perform baseband signal processing of signals, transceived by said radio units (2-i), in a frequency domain; and
   a connection interface (12) which interfaces between said radio unit (2-k) and any of said plurality of baseband processing units (11-j) with signals in a frequency domain.

2. A radio communication apparatus as set forth in claim 1, wherein said radio unit (2-k) includes:

   a time domain converting unit (212) which converts signals in a frequency domain from said connection interface (12) into signals in a time domain; and
   a frequency domain converting unit (224) which converts signals in a time domain received through the antennas (24-k) into signals in a frequency domain, and then outputs the converted signals to said connection interfaces (12).

3. A radio communication apparatus as set forth in claim 1 or claim 2,
   wherein said time domain converting unit (212) is formed by an Inverse Fast Fourier Transforming (IFFT) unit, and
   wherein said frequency domain converting unit (224) is formed by a Fast Fourier Transforming unit (FFT).

4. A radio communication apparatus as set forth in any one of claim 1 through claim 3, comprising two or more of said radio units (2-k),
   wherein said connection interface (12) is formed as a matrix switch unit which inputs a signal from any of said baseband processing units (11-j) to any of said radio units (2-k), and inputs any of the signals received by the plurality of radio units (2-k) to any of said baseband processing units (11-j).

5. A radio communication apparatus as set forth in claim 4, wherein said matrix switch unit (12) has: a frequency separation function of separating frequency-division multiplexed signals, received from any of said baseband processing units (11-j), in a frequency domain and distributing the separated signals to a plurality ones of said radio units (2-k); and a frequency-division multiplexing function of frequency-division multiplexing the signals of the plurality of radio units (2-k) and outputting the multiplexed signals to any of said baseband processing units (11-j).

6. A radio communication apparatus as set forth in any one of claim 1 through claim 5, further comprising controlling means (13) which controls, when a failure occurs in any (11-j) of said baseband processing units, said connection interface (12) so that any of the radio units (2-k), which transceive signals that were processed by the baseband processing unit (11-j) which has developed the failure, is connected to another (11-p; p = 1 through N, and p '' j) of said baseband processing units (11-j) which does not develop the failure.

7. A radio communication apparatus as set forth in claim 4 or claim 5,
   wherein said radio units (2-k) are made into groups (20-i; i = 1 through m) in cell units or sector units of a cellular mobile communication system, and
   wherein said matrix switch unit (12) has signal paths set therein so that signals from the radio units (2-k) which belong to the same group (20-i) are output to the same baseband processing unit (11-j).

8. A radio communication apparatus as set forth in claim 4 or claim 5,
   wherein said radio units (2-k) are made into groups (20-i) in cell units or sector units of a cellular mobile communication system, and
   wherein said matrix switch unit (12) has signal paths set therein so that signals from the radio units (2-k) which belong to different groups (20-i) are output to the same baseband processing unit (11-j).

9. A radio communication apparatus as set forth in claim 4 or claim 5,
   wherein said radio unit (2-k) is configured to transceive frequency-division multiplexed signals of multiple different users, and
   wherein matrix switch unit (12) has signal paths set therein so that signals of the multiple users are processed on one or more of said baseband processing units (11-j) for each user.

10. A radio communication apparatus as set forth in claim 4 or claim 5,
    wherein said radio unit (2-k) is configured to transceive signals in multiple different bands, which signals are frequency-division multiplexed signals of multiple different users, and
    wherein said connection interface (12) has signal paths set therein so that signals in the multiple band are processed on one or more of said baseband processing units (11-j) for each band.

11. A radio unit (2-k) with one or more transceiving antennas thereof, which radio unit (2-k) is connected to a baseband processing apparatus (1) that performs baseband signal processing in a frequency domain, to transceive signals processed on the baseband processing apparatus (1) through the one or more transceiving antennas, said radio unit (2-k) comprising:

    time domain converting means (212) which receives a signal having been subjected to the baseband signal processing on said baseband processing apparatus (1) as a signal in a frequency domain, and converts the signal into a signal in a time domain; and
    frequency domain converting means (224) which converts a signal in a time domain, which signal is received through the transceiving antenna (24-k) and is to be processed on said baseband processing apparatus (1), into a signal in a frequency domain, and then outputs the converted signal.

12. A radio unit as set forth in claim 11,
    wherein said time domain converting means (212) is formed by an Inverse Fast Fourier Transforming (IFFT) unit, and
    wherein said frequency domain convertingmeans (224) is formed by a Fast Fourier Transforming (FFT) unit.

# FIG. 1

## FIG. 2

RADIO
TRANSCEIVER-A
(2 ANTENNAS)

HOT SPOT
AREA #1
20-1

HOT SPOT
AREA #2
20-2

RADIO
TRANSCEIVER-B
(4 ANTENNAS)

HOT SPOT
AREA #3
20-3

RADIO
TRANSCEIVER-C
(2 ANTENNAS)

HOT SPOT
AREA #4
20-4

RADIO
TRANSCEIVER-D
(1 ANTENNA)

OPTICAL CABLE

BASEBAND
PROCESSOR
1

EP 1 841 159 A2

FIG. 3

RADIO TRANSCEIVER & ANTENNA

SECTOR #1

SECTOR #2

SECTOR #3

2(20-1)

2(20-2)

2(20-3)

1

BASEBAND PROCESSOR

# FIG. 4

EP 1 841 159 A2

# FIG. 5

# FIG. 6

EP 1 841 159 A2

FIG. 7(A)

FREQUENCY AXIS

FIG. 7(B)

EP 1 841 159 A2

FIG. 8(A)

10 MHz BAND

5MHz BAND    5MHz BAND

A    B

f

FREQUENCY AXIS

FIG. 8(B)

11-1

BASEBAND
PROCESSING FUNCTION
UNIT (BAND A)

12(12S,12R)

MATRIX SWITCH

2-1(~2-M)

ANTENNA TRANSCEIVER

IFFT    FFT

24-1(~24-M)

212    224

BASEBAND
PROCESSING FUNCTION
UNIT (BAND B)

11-2

# FIG. 9

EP 1 841 159 A2

**REFERENCES CITED IN THE DESCRIPTION**

**Patent documents cited in the description**

- JP 2006093791 A
- JP HEI11501172 B
- JP 2001519635 A